Europäisches Patentamt

European Patent Office

Office européen des brevets

(11) Veröffentlichungsnummer : **0 120 279**
**B1**

(12) **EUROPÄISCHE PATENTSCHRIFT**

(45) Veröffentlichungstag der Patentschrift :
07.05.86

(21) Anmeldenummer : 84101719.7

(22) Anmeldetag : 20.02.84

(51) Int. Cl.⁴ : **H 02 K   1/20, H 02 K   1/18**

(54) **Wechselstrommaschine.**

(30) Priorität : 10.03.83 CH 1305/83

(43) Veröffentlichungstag der Anmeldung :
03.10.84 Patentblatt 84/40

(45) Bekanntmachung des Hinweises auf die Patenterteilung : 07.05.86 Patentblatt 86/19

(84) Benannte Vertragsstaaten :
**CH DE FR GB IT LI SE**

(56) Entgegenhaltungen :
CH-A-   432 638
DE-A- 2 047 792
DE-B- 1 213 937
DE-C-   372 328
DE-C-   737 104
FR-A- 1 160 347
FR-A- 1 163 792
US-A- 3 819 965

(73) Patentinhaber : **BBC Aktiengesellschaft Brown,
Boveri & Cie.
Haselstrasse
CH-5401 Baden (CH)**

(72) Erfinder : **Prenner, Herbert
Breite 2b
CH-5200 Windisch (CH)**
Erfinder : **Ulrich, Urban
Hagenbüchlerstrasse 11
CH-5442 Fislisbach (CH)**
Erfinder : **Voser, Max
Hauserstrasse 139
CH-5118 Scherz (CH)**
Erfinder : **Zimmerli, Beat
Schwanengasse 300
CH-5242 Lupfig (CH)**

## Beschreibung

Die Erfindung bezieht sich auf eine Wechselstrommaschine nach dem Gattungsbegriff des Patentanspruchs 1. Eine derartige Maschine ist beispielsweise aus dem Buch von Wiedemann/Kellenberger « Konstruktion elektrischer Maschinen », Springer-Verlag Berlin, Heidelberg, New York, 1967, Seiten 261 ff., insbesondere Abb. 170 auf Seite 262, bekannt.

In den Standardausführungen elektrischer Wechselstrommaschinen mit Achshöhen bis etwa 1 000 mm wird üblicherweise ein Statorblechpaket mit kreisrundem Blechschnitt in ein Gehäuse eingebaut, das entweder quaderförmige oder zylindrische Gestalt aufweist. Das Blechpaket kann entweder selbsttragend ausgeführt sein oder es wird Blech für Blech oder auch Teilpaket für Teilpaket in das Gehäuse eingeschichtet. Im ersten Fall wird es durch Längsbolzen (Zuganker) oder Zugleisten so in sich verspannt, dass es ein in sich geschlossenes Ganzes bildet, das ausserhalb der Maschine für sich vollständig hergestellt und auch bewickelt werden kann, und erst zuletzt in das Gehäuse eingesetzt wird. Ein derart aufgebauter Stator wird in der einschlägigen Literatur als Einschiebestator bezeichnet. Das Gehäuse dient lediglich als abschliessender Aussenmantel, das in der Regel noch zur Kühlgasführung herangezogen wird. Es wird mechanisch im wesentlichen durch das Gewicht der Maschine beansprucht.

Im zweiten Fall werden die eingeschichteten Bleche bzw. Teilpakete durch das Gehäuse zusammengehalten, zusammengepresst und mit dem Gehäuserücken verbunden. Das Gehäuse wird also ausser durch das Maschinengewicht auch noch durch die das Blechpaket zusammenhaltenden Längs- und Querkräfte beansprucht (vgl. Moeller-Werr « Leitfaden der Elektrotechnik », Bd III « Konstruktion elektrischer Maschinen », B.G. Teubner Verlagsgesellschaft, Leipzig, 1950, Seiten 70 ff.).

In beiden Fällen bedingt die Abstützung des Blechpakets bzw. der Einzelbleche/Teilpakete eine unerwünschte Vergrösserung der Achshöhe und des Bauvolumens.

Der Erfindung liegt die Aufgabe zugrunde, eine Wechselstrommaschine der eingangs genannten Gattung zu schaffen, welche die Vorteile beider Statortypen in sich vereinigt und darüber hinaus eine wesentliche Verringerung der Achshöhe und damit der Gehäusehöhe und -breite bei vorgegebenen Aktivteilabmessungen ermöglicht.

Die Lösung dieser Aufgabe erfolgt durch die im Patentanspruch 1 gekennzeichnete Erfindung.

Wesentliches Kennzeichen der Erfindung ist die konsequente Ausnutzung des durch das Maschinengehäuse gegebenen Raumes:

Der elektrisch und magnetisch wirksame Eisenquerschnitt reicht bis an die Gehäusewände. Unabhängig von der Aussenkontur des Blechkörpers liegen alle Elemente mit Tragfunktionen, zur Abstützung, Verspannung des Blechkörpers und zur Kühlgasführung ausserhalb des Inkreises und beeinträchtigen die elektrisch/magnetische Funktion des Blechkörpers nicht. Augenfälligstes Merkmal ist dabei die namhafte Reduktion der Achshöhe bei vorgegebener Maschinenleistung bzw. Eisenvolumen. Abgesehen vom kleineren Platzbedarf wirkt sich die realisierbare kleinere Achshöhe gesamthaft auf die Fertigungs- und Materialkosten aus.

Bei der Weiterbildung des Erfindungsgegenstandes gemäss Anspruch 2 bildet der Blechkörper zusammen mit den Gehäusewänden und den Endplatten eine selbsttragende Baueinheit mit allen Vorteilen eines Einschiebestators. Gleiches gilt auch für die in den Ansprüchen 3 und 4 gekennzeichnete Weiterbildung, die noch mehr dem klassischen Einschiebestator entspricht, mit dem Unterschied, dass die Pressplatten des Einschiebestators auch die Funktion der Gehäuseendplatten übernehmen.

Allen Ausführungsformen gemeinsam ist die grosse Materialersparnis. Die Kühlgasführung erfolgt in den elektrisch/magnetisch nicht genutzten Ecken des Statorgehäuses, das bei der Weiterbildung nach den Ansprüchen 3 und 4 nur noch zum Teil Trag- und Abstützfunktionen zu übernehmen hat. Die Kanäle in den Gehäuseecken sind insbesondere bei acht- und mehreckigem oder rundem Blechschnitt gross genug, um die erforderlichen Kühlgasmengen bei niedriger Strömungsgeschwindigkeit zu führen.

Der Wegfall des Ringraumes zwischen Blechpaket und Gehäuse bringt keine — an sich zu erwartende — Verschlechterung der Kühlverhältnisse für die Statorwicklung und den Statorblechkörper mit sich, insbesondere dann nicht, wenn die Mittel zur gezielten Führung des aus dem Maschinenluftspalt einströmenden Kühlgases als in Richtung zu den Kanälen verlaufende Stege ausgebildet sind. Diese sind derart angeordnet und in Umfangsrichtung über die Ventilationskanäle verteilt, dass zwischen den einzelnen Stegen und zwischen den Stegen und der Gehäusewand überall annähernd gleiche Luftmengen in die prismatischen Kanäle eintreten und auch die Strömungsgeschwindigkeit dort überall gleich ist.

Prinzipiell ist es möglich, die Endplatten samt dem dazwischenliegenden Blechpaket durch Zuganker zu verspannen, wobei die Zuganker durch die Kanäle, also ausserhalb des Blechpakets, verlaufen. Diese Weiterbildung ist für Ausführungen von Interesse, bei denen die Kühlluft über am Gehäusemantel liegende Gehäuseöffnungen abgeführt wird.

Bei Wechselstrommaschinen mit Kühlgasaustritt im Maschinenendteilbereich würden die Angriffsflächen für die Zuganker Durchflussquerschnitte jedoch zu sehr verringern. Eine Weiterbildung des Erfindungsgegenstandes sieht deshalb vor, zumindest eine, vorzugsweise jedoch beide Endplatten (bei über die Endplatten nach vorgängigem axial zusammengepresstem Blechpaket) mit allen vier Gehäusewänden zu verschweissen. Die dazu erforderlichen Schweissoperationen an den Gehäuselängskanten und den Gehäusestirnkanten spielen sich dabei praktisch ausschliesslich ausserhalb des gegenüber derartigen Operationen empfindlichen Blechkörpers ab, so dass Eisenschlüsse und dergleichen vermieden werden.

Auch bei den Ausführungsformen mit Zugleisten beeinträchtigen Schweissoperationen an diesen den Blechkörper nur unwesentlich, da diese nur ausserhalb des wirksamen Blechquerschnitts vorgenommen werden. Dies gilt insbesondere für Blechkörper, die aus segmentierten Einzelblechen aufgebaut sind. Die mit dem Blechkörper verschweissten Zugleisten bestimmen im wesentlichen die Stabilität des Blechverbandes.

Prinzipiell wäre es möglich, die Bohrung in der Endplatte der Innenkontur der Statorbleche anzupassen, d. h. die Pressfinger für die Statorzähne einstückig mit den Endplatten auszuführen. Aus herstellungstechnischen Gründen ist es jedoch vorteilhaft, zwischen beide Endplatten und den äusseren Endblechen des Statorblechpakets als Pressfinger wirkende Stege vorzusehen, welche entweder mit den Endplatten oder den Endblechen der äusseren Teilpakete fest verbunden sind. Diese Stege distanzieren die Endplatten von den Endblechen und schaffen Kühlkanäle an den Stirnseiten des Blechpakets.

Die Erfindung wird nachstehend anhand von in der Zeichnung dargestellter Ausführungsbeispiele näher erläutert.

Figur 1a-1d schematische Darstellungen mit eines Statorblechkörpers mit unterschiedlichen Blechschnitten einer elektrischen Wechselstrommaschine,

Figur 2 einen Querschnitt im Bereich der Ventilationskanäle durch einen Stator nach der Erfindung,

Figur 3 eine Ansicht auf die Stirnseite des Stators bei entferntem Statorendteil ohne Statorwicklung,

Figur 4 einen Längsschnitt durch den Stator gemäss Fig. 2 bzw. Fig. 3 längs der Ebene AA,

Figur 5 einen Querschnitt durch einen Blechkörper mit zwölfeckiger Aussenkontur, und

Figur 6 eine Seitenansicht auf den Stator gemäss Fig. 5 bei entfernter Gehäuseseitenwand.

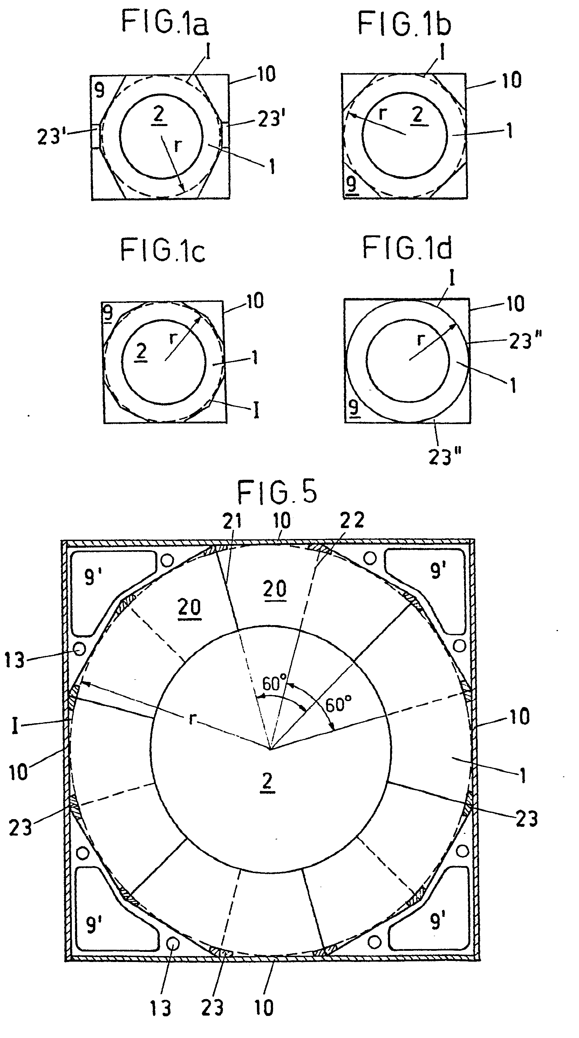

Die in Fig. 1 dargestellten Querschnitte zeigen einen sechseckigen (Fig. 1a), achteckigen (Fig. 1b), zwölfeckigen (Fig. 1c) und runden (Fig. 1d) Blechschnitt. Deutlich ist zu erkennen, wie in jedem Fall der Inkreis I und damit der aktive Blechkörperdurchmesser 2r dem lichten Gehäusedurchmesser entspricht, das Gehäuse 10 somit optimal ausgenützt ist, die Gehäuseecken aber ausreichend Durchtrittsfläche zur Führung des Kühlgases aufweisen.

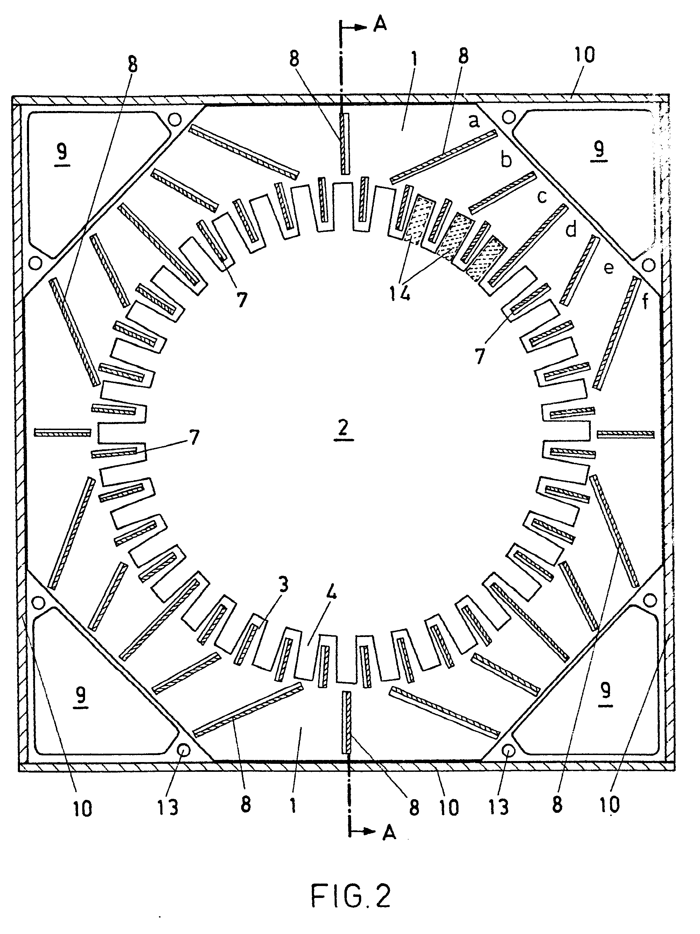

In Fig. 2 ist für den Fall eines achteckigen Blechschnitts ein mehr ins Detail gehendes Ausführungsbeispiel dargestellt.

Im Querschnitt durch den Statormittelteil gemäss Fig. 2 ist mit 1 ein Statorblech bezeichnet.

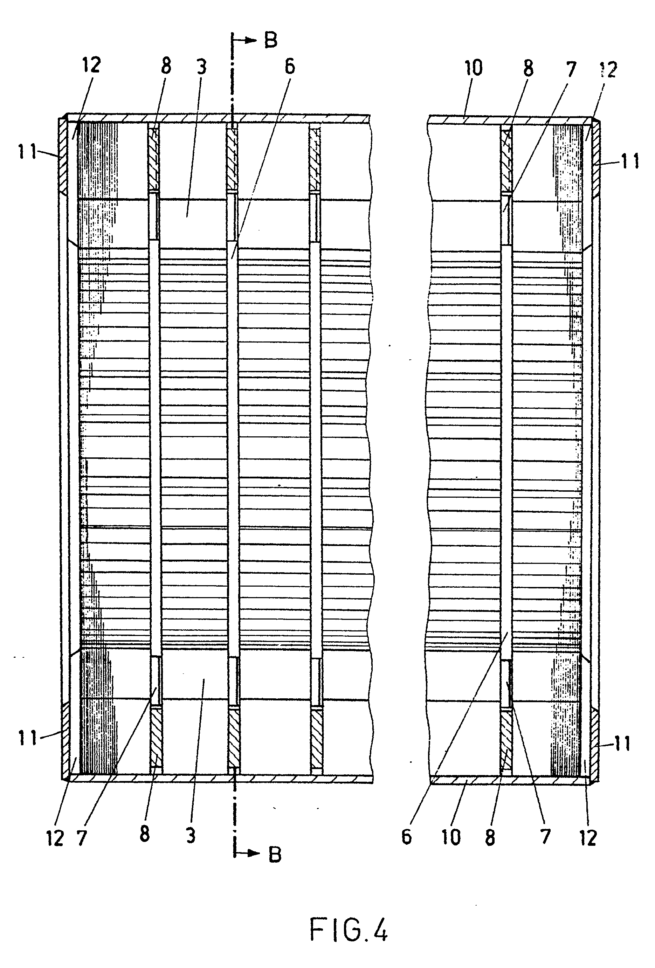

Das Statorblech hat die Aussenkontur eines regelmässigen Achtecks, mit einer Statorbohrung 2, Statorzähnen 3 und Statornuten 4. Jeweils eine Vielzahl von Statorblechen 1 sind zu Teilblechpaketen 5 zusammengefasst, welche durch radial verlaufende Ventilationskanäle 6 voneinander distanziert sind (Fig. 4). Diese Ventilationskanäle sind durch zwei Gruppen Distanzelemente, luftspaltseitige 7 und luftspaltferne 8 gebildet, die je auf einem Endblech eines Teilpakets befestigt sind. Alle Distanzelemente weisen L-förmigen Querschnitt auf und sind z. B. auf die jeweiligen Endbleche geschweisst. Die luftspaltseitigen Distanzelemente 7 erstrecken sich in radialer Richtung praktisch über die gesamte Höhe des Statorzahns 3. Die anderen Distanzelemente 8 verlaufen im wesentlichen in Richtung zu den prismatischen Kanälen 9 in den Gehäuseecken.

Der Statorblechkörper ist von einem quadratischen Gehäuse, bestehend aus Gehäusewänden 10 und Endplatten 11 umgeben. Die Gehäusewände liegen auf jeder zweiten aufeinanderfolgenden Seitenfläche des Blechpakets auf und stützen dieses in radialer Richtung ab. Die über die besagten Seitenflächen hinausragenden Gehäusewände 10 stossen stumpf aufeinander und sind miteinander verschweisst. Auf diese Weise werden in den Gehäuseecken prismatische Kühlkanäle 9 geschaffen, welche mit den radialen Ventilationskanälen 6 zwischen den Teilpaketen 5 in freier Verbindung stehen. Die Kühlkanäle 9 dienen zur Abfuhr des aus den Ventilationskanälen 6 austretenden Kühlgases.

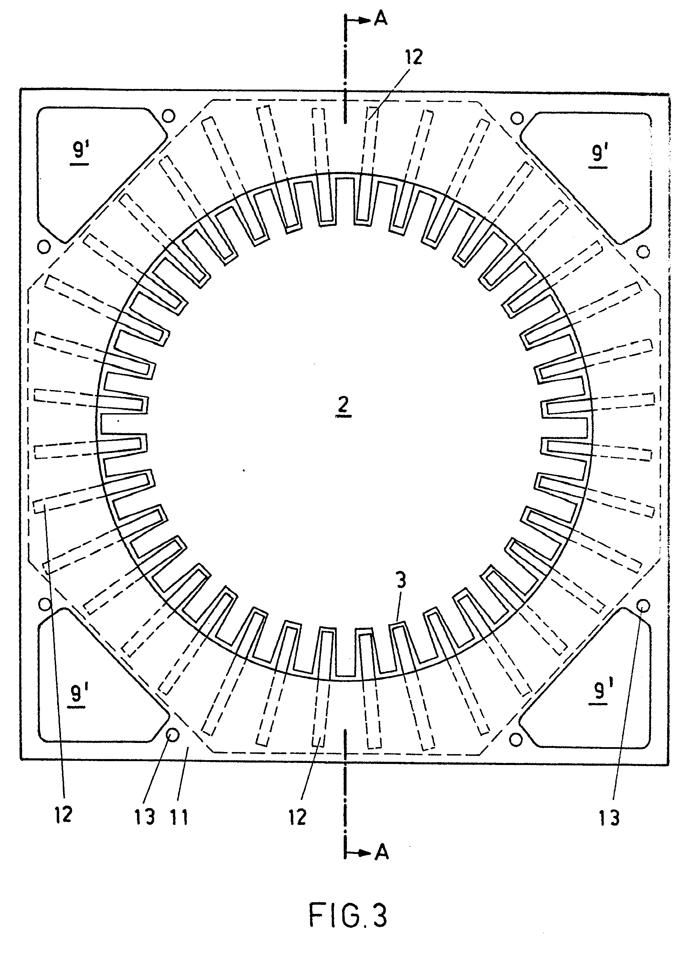

Die Endplatten 11 des Gehäuses sind unter Ausübung einer axial auf das Blechpaket wirkenden Vorspannung über ihren gesamten Umfang mit den Stirnkanten der Gehäusewände 10 verschweisst. Zwischen den Endplatten 11 und den Endblechen der äusseren Teilpakete 5 sind als Pressfinger für das Statorblechpaket wirkende Stege 15 angeordnet. Diese erstrecken sich in radialer Richtung von den luftspaltnahen Enden der Statorzähne 3 bis hin zur Peripherie der Statorendbleche (Fig. 3). Sie sind entweder mit der Endplatte 11 oder mit den Endblechen des äussersten Teilblechkörpers verschweisst.

Jede Endplatte 11 weist (neben der Statorbohrung 2) vier weitere Durchbrüche 9' auf, welche eine freie Verbindung zwischen den prismatischen Kanälen 9 und dem Raum ausserhalb des Statormittelteils darstellen. Diese Durchbrüche 9' weisen einen gegenüber dem Querschnitt der prismatischen Kanäle geringfügig kleineren Querschnitt auf, bedingt durch Anbringungsflächen bzw. Bohrungen 13 zur Befestigung und Zentrierung von zwei (nicht dargestellten) Statorendteilen. Diese Statorendteile nehmen den Wickelkopf, den Lüfter samt zugehöriger Verschalung und die Lager des Rotors auf.

Beim Betrieb der elektrischen Maschine gelangt das aus dem Rotor und dem Maschinenluftspalt austretende Kühlgas in die radial verlaufenden Ventilationskanäle 6 und zum geringen Teil auch in die radial verlaufenden Kanäle zwischen Blechpaket und Endplatten 11 und wird

zwischen den luftspaltfernen Distanzelementen 8 in die prismatischen Kanäle 9 und von dort aus durch die Durchbrüche 9' in den Endplatten 11 nach aussen geleitet. Wie aus Fig. 2 hervorgeht, ist die Anordnung und Verteilung der luftspaltfernen Distanzelemente 8 so gewählt, dass das Kühlgas am Austritt in den prismatischen Kanal 9 überall annähernd dieselbe Geschwindigkeit aufweist. Im vorliegenden Ausführungsbeispiel sind die wirksamen Austrittsquerschnitte a, ..., f (Fig. 2) proportional zu den jeweiligen wirksamen Eintrittsquerschnitten der ihnen zugeordneten Kanäle zwischen den Distanzelementen 8 bzw. diesen und der Gehäusewand.

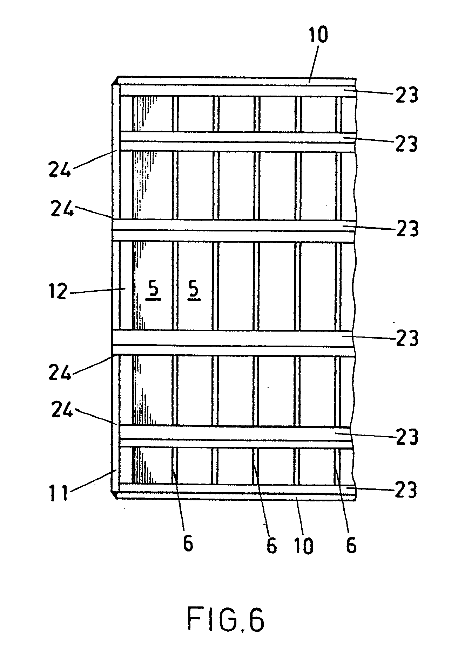

In Fig. 5 ist ein Ausführungsbeispiel der Erfindung für einen Blechkörper mit zwölfeckiger Aussenkontur dargestellt, wobei gleiche Teile mit denselben Bezugsziffern wie in den bisherigen Figuren versehen worden sind. Anders als im Vorbeschriebenen sind die Bleche aus segmentierten Einzelblechen 20 zusammengesetzt, die in bekannter Weise von Lage zu Lage versetzt sind. Die Stossfugen der einen Lage sind mit 21, diejenigen der darunterliegenden (strichliert eingezeichnet) mit 22 bezeichnet. Am Aussenumfang weisen die Bleche 20 jeweils drei Ausnehmungen auf. Die Stossfugen 21 und 22 liegen dabei im Bereich der Ausnehmungen. Die Tiefe der Ausnehmungen reicht bis an den Inkreis I. Diese Ausnehmungen bilden gesamthaft betrachtet axial verlaufende Nuten am Aussenmantel des Blechkörpers. In diese Nuten sind Zugleisten 23 mit prismatischem Querschnitt eingesetzt, die mit dem Blechkörper unter Ausübung einer Vorspannung auf den Blechkörper verschweisst sind.

Wie aus der Seitenansicht gemäss Fig. 6 hervorgeht, sind die Zugschienen 23 durch entsprechend ausgebildete Bohrungen 24 in beiden Endplatten 11 hindurchgeführt und dort verschweisst. Entsprechend der Ausführung nach den Figuren 2 bis 4 sind zwischen dem Endblech des äussersten Teilblechkörpers 5 und der Endplatte 11 Druckfinger 12 angeordnet, von denen aus Gründen der Uebersichtlichkeit nur ein senkrecht zur Zeichenebene verlaufender dargestellt ist. Aus demselben Grunde wurde auf die Eintragung der Distanzelemente 7, 8 zwischen den einzelnen Teilblechkörpern 5 verzichtet.

Die Zugschienen haben in der gezeichneten Form dachkantprismatischen Querschnitt, wobei jeweils eine « Dachfläche » an der Gehäusewand 10 anliegt. Alternativ können die Zugschienen Tragquerschnitt aufweisen, wobei die freie Seitenfläche parallel zur Gehäusewand verläuft und auf dieser aufliegt. In beiden Fällen ergibt sich eine flächige Abstützung des Blechkörpers auf den Gehäusewänden.

Die Möglichkeit der Verspannung des Statorblechkörpers mit Zugschienen, welche an den Endplatten des Gehäuses verankert sind, lässt sich selbstverständlich auf sechs- oder achteckige Blechschnitte anwenden, da in beiden Fällen jeweils ausserhalb des Inkreises genügend Raum zur Unterbringung der Ausnehmungen für die Zugschienen 23 vorhanden ist. Dies gilt sowohl für sektorierte Bleche als auch für einstückige.

Bei Blechen mit sechseckigem Blechschnitt (Fig. 1a) besteht darüber hinaus die Möglichkeit, den Statorblechkörper unten und oben auf dessen Seitenflächen und seitlich über Zugleisten 23' abzustützen. Diese Zugleisten liegen in seitlichen Nuten des Blechkörpers und reichen maximal bis zum Inkreis I, und verringern somit nicht den wirksamen Blechquerschnitt.

Bei einem runden Blechschnitt nach Fig. 1d sind die Zugleisten 23" auf dem Aussenumfang des Blechkörpers gelegen und mit diesem und den Endplatten verschweisst. Die Zugleisten 23" haben keilähnlichen Querschnitt, wobei die freie Keilfläche an der Gehäusewand 10 anliegt.

## Patentansprüche

1. Wechselstrommaschine, deren Statorblechkörper zwischen zwei Endplatten (11) eingespannt ist und durch radial verlaufende Ventilationskanäle (6) in einzelne Teilblechkörper (5) unterteilt ist, welche Ventilationskanäle (6) durch Distanzelemente (7, 8) gebildet sind, die auf einem Teilkörperendblech angeordnet sind, und welcher Statorblechkörper von einem Gehäuse umgeben ist, das zwischen sich und dem Blechrücken Raum zur Abfuhr des aus den radialen Ventilationskanälen ausströmenden Kühlgases freilässt, dadurch gekennzeichnet, dass die Gehäusewände (10) Tangenten an den Inkreis (I) bilden, welcher der Blechschnittaussenkontur eingeschrieben ist, dass in den Gehäuseecken nur im wesentlichen durch die Gehäusewände (10) und den Blechkörperrücken begrenzte, sich über die gesamte Blechkörperlänge erstreckende und nur durch den Blechkörper voneinander getrennte Längskanäle (9) vorgesehen sind, der Blechkörper in Axialrichtung durch ausserhalb des besagten Inkreises (I) verlaufende Spannmittel (10 ; 23, 23', 23") zusammengespannt ist und dass die Distanzelemente (8) im luftspaltfernen Bereich des Statorblechkörpers so ausgebildet sind, daß die Ventilationskanäle ausgehend vom gesamten Innenumfang des Statorblechkörpers zu den Gehäuseecken hinführen.

2. Wechselstrommaschine nach Anspruch 1, dadurch gekennzeichnet, dass der Blechkörper jeweils zwischen zwei gegenüberliegenden Gehäusewänden eingespannt und auf den Gehäusewänden linienförmig und/oder flächig abgestützt ist und dass die Gehäusewände mit den Endplatten (11) des Gehäuses unter Ausübung einer in Axialrichtung wirkenden Vorspannung auf den Blechkörper fest verbunden sind.

3. Wechselstrommaschine nach Anspruch 1, dadurch gekennzeichnet, dass beide Endplatten (11) samt dem dazwischenliegenden Blechkörper mittels Zugleisten (23) verspannt sind und die Zugleisten (23) ausserhalb des Inkreises (I) in Axialrichtung verlaufen.

4. Wechselstrommaschine nach Anspruch 3, dadurch gekennzeichnet, dass der Blechkörper am Aussenumfang mit gleichmässig über den Aussenumfang verteilten und dem Querschnitt der Zugleisten (23, 23', 23'') angepassten Ausnehmungen versehen ist, wobei die Ausnehmungen maximal bis zum besagten Inkreis (I) reichen.

5. Wechselstrommaschine nach Anspruch 4, dadurch gekennzeichnet, dass der Blechkörper aus segmentierten Einzelblechen (20) aufgebaut ist, die lagenweise gegeneinander versetzt sind, und dass die Stossfugen (21, 22) zweier Sektorbleche (20) einer Lage im Bereich jeder zweiten, dritten oder vierten, sich in Umfangsrichtung folgenden Ausnehmung zu liegen kommen.

6. Wechselstrommaschine nach einem der Ansprüche 1 und 2, dadurch gekennzeichnet, dass die Aussenkontur des Blechkörpers die Form eines annähernd achsensymmetrischen n-Ecks aufweist, wobei n geradzahlig und grösser als 6 ist, dass das Gehäuse einen quadratischen Querschnitt hat und dass die parallel zu den Gehäusewänden (10) verlaufenden Seitenflächen des Blechkörpers an den ihnen zugeordneten Gehäusewänden (10) anliegen und durch sie abgestützt sind, dass die über die besagten Seitenflächen des Blechkörpers hinausragenden Gehäusewände (10) unter Bildung von vier sich über die gesamte Länge des Blechkörpers erstreckenden Längskanälen (9) für die Abfuhr des aus den Ventilationskanälen (6) austretenden Kühlgases fest miteinander verbunden sind.

7. Wechselstrommaschine nach Anspruch 6, dadurch gekennzeichnet, dass bei einem acht- oder zwölfeckigen Blechschnitt jede zweite bzw. dritte aufeinanderfolgende Seitenfläche des Blechkörpers an der ihr zugeordneten Gehäusewand (10) anliegt und durch sie abgestützt ist.

8. Wechselstrommaschine nach Anspruch 3, dadurch gekennzeichnet, dass bei einem kreisrunden Blechschnitt die Zugleisten (23'') annähernd keilförmigen Querschnitt aufweisen und aussen auf den Aussenumfang des Blechkörpers aufgeschweisst sind, wobei jeweils eine freie Fläche der Zugleisten (23'') parallel zur Gehäusewand (10) und in der Tangentialebene an den Blechkörper verläuft.

9. Wechselstrommaschine nach einem der Ansprüche 1 bis 8, dadurch gekennzeichnet, dass zwischen beiden Endplatten (11) und den äusseren Endblechen des Statorblechpakets als Pressfinger für das Statorblechpaket wirkende Stege (12) geschaltet sind, die entweder mit den Endplatten (11) oder besagten Endblechen fest verbunden sind und die Endplatten (11) von den Endblechen distanzieren.

10. Wechselstrommaschine nach einem der Ansprüche 1 bis 9, dadurch gekennzeichnet, dass die in Richtung zu den Längskanälen verlaufenden Distanzelemente (8) in den Ventilationskanälen (6) derart ausgebildet und über den Umfang der Ventilationskanäle (6) verteilt sind, dass zwischen benachbarten Distanzelementen (8) bzw. zwischen den wandnahen Distanzelementen und den Gehäusewänden (10) überall annähernd gleiche Kühlgasmengen in die prismatischen Kanäle (9) austreten und auch die Strömungsgeschwindigkeiten des Kühlgases dort annähernd überall gleich sind.

**Claims**

1. Alternating-current machine, the laminated stator body of which is clamped between two end plates (11) and is subdivided into individual laminated part-bodies (5) by radially extending ventilation ducts (6), which ventilation ducts (6) are formed by spacing elements (7, 8) which are arranged on a part-body end lamination and which laminated stator body is surrounded by a housing which leaves space between itself and the back of the laminations for removing the cooling gas streaming out of the radial ventilation ducts, characterised in that the housing walls (10) form tangents at the incircle (I) inscribed on the outside contour of the lamination section, that longitudinal ducts (9), which are essentially only limited by the housing walls (10) and the back of the laminated body, extend over the entire length of the laminated body and are separated from each other only by the laminated body, are provided in the corners of the housing, the laminated body is clamped together in the axial direction by clamping means (10 ; 23, 23', 23'') which extend outside the said incircle (I), and that the spacing elements (8) are constructed in the area remote from the air gap of the laminated stator body in such a manner that the ventilation ducts lead towards the corners of the housing starting from the entire inside circumference of the laminated stator body.

2. Alternating-current machine according to Claim 1, characterised in that the laminated body is in each case clamped between two opposite housing walls and is supported linearly and/or areally on the housing walls and that the housing walls are rigidly joined to the end plates (11) of the housing, exercising a prestress acting in the axial direction on the laminated body.

3. Alternating-current machine according to Claim 1, characterised in that both end plates (11) and the intermediate laminated body are clamped by means of tension bars (23) and the tension bars (23) extend in the axial direction outside the incircle (I).

4. Alternating-current machine according to Claim 3, characterised in that the laminated body is provided at its outside circumference with recesses which are uniformly distributed over the outside circumference and are matched to the cross-section of the tension bars (23, 23', 23''), in which arrangement the recesses reach to the said incircle (I) at a maximum.

5. Alternating-current machine according to Claim 4, characterised in that the laminated body is constructed of segmented single laminations (20) which are offset in layers with respect to each other and that the butt joints (21, 22) of two sector laminations (20) of a layer come to be located within the area of each second, third or fourth recess following each other in the circumferential direction.

6. Alternating-current machine according to one of Claims 1 and 2, characterised in that the outside contour of the laminated body has an approximately axially symmetrical n-cornered shape, where n is an even number and greater than 6, the housing has a square cross-section and that the side faces of the laminated body extend parallel to the housing walls (10), rest against the housing walls (10) associated with them and are supported by them, that the housing walls (10) projecting past the said side faces of the laminated body are rigidly joined to each other, forming four longitudinal ducts (9), which extend over the entire length of the laminated body, for removing the cooling gas emerging from the ventilation ducts (6).

7. Alternating-current machine according to Claim 6, characterised in that in the case of an eight- or twelve-angled lamination section, each second or third successive side face of the laminated body rests against the housing wall (10) associated with it and is supported by it.

8. Alternating-current machine according to Claim 3, characterised in that in the case of a circular lamination section, the tension bars (23″) have an approximately wedge shaped cross-section and are welded on the outside to the outside circumference of the laminated body, in which arrangement in each case one free face of the tension bars (23″) extends in parallel with the housing wall (10) and in the tangential plane to the laminated body.

9. Alternating-current machine according to one of Claims 1 to 8, characterised in that, between both end plates (11) and the outer end laminations of the laminated stator core, bars (12) are connected which act as pressure fingers for the laminated stator core and which are rigidly joined either to the end plates (11) or the said end laminations and space the end plates (11) away from the end laminations.

10. Alternating-current machine according to one of Claims 1 to 9, characterised in that the spacing elements (8) extending in the direction of the longitudinal ducts in the ventilation ducts (6) are constructed and distributed over the circumference of the ventilation ducts (6) in such a manner that approximately equal quantities of cooling gas emerge everywhere between adjacent spacing elements (8) or between the spacing elements close to the wall and the housing walls (10) into the V-shaped ducts (9) and the flow velocities of the cooling gas are also approximately equal at all points at that location.

**Revendications**

1. Machine à courant alternatif, dont le paquet de tôles du stator est serré entre deux plaques d'extrémité (11) et est divisé en paquets partiels (5) individuels de tôles par des canaux (6) de ventilation orientés radialement, canaux (6) de ventilation qui sont formés par des éléments d'écartement (7, 8) qui sont disposés sur une tôle externe d'un paquet partiel, et paquet de tôles du stator qui est entouré d'une cage qui laisse un espace libre entr'elle-même et l'arrière des tôles pour l'évacuation du gaz de refroidissement quittant les canaux radiaux de ventilation, caractérisée en ce que les parois (10) de la cage sont tangentes au cercle inscrit (I), qui est inscrit au contour extérieur des tôles, en ce qu'il est prévu, dans les angles de la cage, des canaux longitudinaux (9) délimités uniquement essentiellement par les parois (10) de la cage et l'arrière du paquet de tôles, s'étendant sur toute la longueur du paquet de tôles et séparés l'un de l'autre uniquement par le paquet de tôles, en ce que le paquet de tôles est serré en direction axiale à l'aide de moyens de serrage (10 ; 23, 23′, 23″) placés à l'extérieur du cercle inscrit (I) précité et en ce que les éléments (8) d'écartement sont agencés dans la région du paquet de tôles du stator éloignée de l'entrefer de sorte que les canaux de ventilation conduisent depuis la totalité du contour intérieur du paquet de tôles du stator jusqu'aux angles de la cage.

2. Machine à courant alternatif suivant la revendication 1, caractérisée en ce que le paquet de tôles est serré entre chaque paire de parois de la cage qui se font face et s'appuie par une ligne et/ou par une surface sur les parois de la cage, et en ce que les parois de la cage sont fermement attachées aux plaques d'extrémité (11) de la cage en présence d'un effort de précontrainte appliqué en direction axiale au paquet de tôles.

3. Machine à courant alternatif suivant la revendication 1, caractérisée en ce que les deux plaques d'extrémité (11) et le paquet de tôles disposé entr'elles sont serrés au moyen de baguettes de traction (23) et en ce que les baguettes de traction (23) sont disposées en direction axiale à l'extérieur du cercle inscrit (I).

4. Machine à courant alternatif suivant la revendication 3, caractérisée en ce que le paquet de tôles est pourvu, à sa périphérie extérieure, d'évidements uniformément répartis sur la périphérie et ayant une section adaptée à celle des baguettes de traction (23, 23′, 23″) les évidements pénétrant au maximum jusqu'au cercle inscrit (I) précité.

5. Machine à courant alternatif suivant la revendication 4, caractérisée en ce que le paquet de tôles est constitué de tôles individuelles segmentées (20), qui sont décalées l'une par rapport à l'autre en passant d'une couche à la suivante, et en ce que les joints (21, 22) entre deux secteurs de tôle (20) d'une couche sont positionnés dans la région d'un évidement sur deux, trois ou quatre selon la direction circonférentielle.

6. Machine à courant alternatif suivant une des revendications 1 et 2, caractérisée en ce que le contour extérieur du paquet de tôles présente la forme d'un polygone à n côtés à symétrie approximativement axiale, n étant un nombre pair plus grand que 6, en ce que la cage a une section carrée, en ce que les faces latérales du paquet de tôles qui sont orientées parallèlement aux parois (10) de la cage touchent les parois (10) de la cage qui leur font face et sont soutenues par celles-ci, et en ce que les parois (10) de la cage qui se prolongent au-delà des faces latérales précitées du paquet de tôles sont fermement attachées l'une à l'autre en formant quatre canaux (9) longitudinaux qui s'étendent sur toute la longueur du paquet de tôles pour l'évacuation du gaz de refroidissement quittant les canaux (6) de ventilation.

7. Machine à courant alternatif suivant la revendication 6, caractérisée en ce que, dans le cas de tôles de forme octogonale ou dodécagonale, une face latérale sur deux ou sur trois du paquet de tôles touche la paroi (10) de la cage qui lui fait face et est soutenue par celle-ci.

8. Machine à courant alternatif suivant la revendication 3, caractérisée en ce que, dans le cas de tôles de forme circulaire, les baguettes de traction (23") ont une section approximativement en forme de coin et sont soudées sur et à l'extérieur de la périphérie extérieure du paquet de tôles, chaque baguette de traction (23") ayant ainsi une face libre parallèle à la paroi (10) de la cage et l'autre dans le plan tangent au paquet de tôles.

9. Machine à courant alternatif suivant une des revendications 1 à 8, caractérisée en ce qu'entre les deux plaques d'extrémité (11) et les tôles externes les plus extérieures du paquet de tôles du stator sont placées des nervures (12) jouant le rôle de doigts presseurs pour le paquet de tôles du stator, nervures qui sont fermement attachées soit aux plaques d'extrémité (11) soit aux tôles externes précitées et qui écartent les plaques d'extrémités (11) des tôles externes.

10. Machine à courant alternatif suivant une des revendications 1 à 9, caractérisée en ce que les éléments d'écartement (8) orientés vers les canaux longitudinaux sont disposés dans les canaux de ventilation (6) et répartis sur la périphérie des canaux de ventilation (6) de telle sorte qu'entre des éléments d'écartement (8) voisins respectivement entre les éléments d'écartement proches de la paroi et les parois (10) de la cage il entre partout des quantités de gaz de refroidissement approximativement égales dans les canaux prismatiques (9) et aussi que la vitesse de circulation du gaz de refroidissement y est partout approximativement égale.

**0 120 279**

## FIG.1a

## FIG.1b

## FIG.1c

## FIG.1d

## FIG.5

FIG.2

FIG.3

FIG.4

FIG.6